# EUROPÄISCHE PATENTSCHRIFT

(11) **EP 2 170 588 B1**
(45) Veröffentlichungstag und Bekanntmachung des Hinweises auf die Patenterteilung: **01.02.2012**
(21) Anmeldenummer: 08756810.1
(22) Anmeldetag: 10.06.2008
(51) Int. Cl.: B29C 73/02

(54) **REPARATUR EINES FORMWERKZEUGES**
REPAIR OF A MOULD
RÉPARATION D'UN OUTIL DE MOULAGE

(30) Priorität: 04.07.2007 AT 10272007
(43) Veröffentlichungstag der Anmeldung: 07.04.2010
(73) Patentinhaber: Invicon Chemical Solutions Gmbh, 6890 Lustenau (AT)
(72) Erfinder: ZANGHELLINI, Gerhard, FL-9494 Schaan (LI)
(74) Vertreter: Hofmann, Ralf U.
(86) Internationale Anmeldenummer: PCT/AT2008/000200
(87) Internationale Veröffentlichungsnummer: WO 2009/003203

(56) Entgegenhaltungen:
- EP-A- 1 640 392
- AT-U1- 7 564
- DE-A1- 3 521 382
- DE-A1- 10 127 134

## Beschreibung

Die Erfindung betrifft die Reparatur eines Formwerkzeuges.

Bei der Herstellung von Formwerkzeugen und auch im Produktionsbetrieb entstehen oft kleine Fehler oder Beschädigungen am Formwerkzeug, die ausgebessert werden müssen. Solche Ausbesserungen sind mit einem hohen Aufwand verbunden, wobei das Formwerkzeug in der Regel ausgebaut werden und vor Ort oder häufiger beim Werkzeugbauer bearbeitet werden muss. Die Reparatur kann durch Schweißen und eine Nachbearbeitung, die einen Fräsvorgang umfasst, erfolgen. Beim Schweißen treten speziell bei Aluminiumformen große Fehler wegen der Wärmeleitfähigkeit auf, so dass die Schweißstelle in der Regel eine Minderwertigkeit darstellt. Der apparative Aufwand für das heute übliche Leserschweißen ist sehr hoch und kostenintensiv. Eine andere Reparaturmöglichkeit besteht darin, ein angepasstes Formteil einzusetzen. Hierbei wird die fehlerhafte Stelle zunächst entsprechend geometrisch exakt ausgefräst. Das Ersatzteil muss separat mit einer CNC-Fräsmaschine passgenau hergestellt werden und in der Folge in der ausgefrästen Fehlstelle festgelegt werden, beispielsweise thermisch. Bei beiden Reparaturmethoden ist das Formwerkzeug für mehrere Tage oder Wochen nicht einsatzfähig.

Häufig müssen nach einer Probespritzung auch weitere Anpassungen am Formwerkzeug durchgeführt werden, wobei die gleichen Probleme auftreten.

Aufgabe der Erfindung ist es die Reparatur von Formwerkzeugen für die Kunststoffverarbeitung zu vereinfachen. Hierzu schlägt die Erfindung zur Reparatur eines Formwerkzeuges die Verwendung eines Materials gemäß Patentanspruch 1 vor.

Das gemäß der Erfindung verwendete Reparaturmaterial weist ein aushärtbares Monomer sowie einen Initiator oder eine Härterkomponente für die Polymerbildung auf. In einer vorteilhaften Ausführungsform erfolgt die Polymerbildung durch Polymerisation. Vorzugsweise wird hierbei ein Initiator eingesetzt, der die Polymerisation durch Lichteinwirkung auslöst (Photopolymerisation). Es kann auch ein Initiator für eine Aushärtung durch eine erhöhte Temperatur eingesetzt werden.

In einer anderen Ausführungsform der Erfindung kann die Polymerbildung auch durch Polyaddition erfolgen. Es handelt sich hier um 2-Komponentensysteme, wobei vor der Applikation ein Basismonomer und eine einen Reaktionspartner bildende Härterkomponente miteinander gemischt werden. Ein Beispiel für solche 2-Komponentensysteme sind die Epoxid-Kunstharze.

Reparaturmaterialien, bei denen eine Aushärtung eines Monomers durch Polymerisation erfolgt, sind aus der Dentalindustrie bekannt, vgl. beispielsweise US 2003/0008936 A1 und US 6 103 800 A und den in diesen Schriften genannten Stand der Technik. Auch für die Reparatur von Naturstein wurden solche Materialien bereits eingesetzt, wie dies aus der EP 1 589 050 A1 oder aus der AT 007 564 U1 hervorgeht.

Würde ein solches herkömmliches Reparaturmaterial zur Reparatur eines Formwerkzeuges für die Kunststoffverarbeitung eingesetzt werden, so würde in der Regel das Problem auftreten, dass das in das Formwerkzeug eingebrachte thermoplastische oder reaktive Material an der Reparaturstelle anhaften würde und so Fehlproduktionen erhalten würden. Durch eine Oxidation des Reparaturmaterials kann sich die anhaftende Wirkung im Laufe der Zeit hierbei verstärken.

Um ein Anhaften von eingebrachtem Kunststoffmaterial an einem Formwerkzeug zu verhindern, sind Formtrennmittel bekannt, beispielsweise auf Basis von Silikon oder fluorierten Kohlenwasserstoffen. Ein wiederholtes Auftragen solcher Formtrennmittel ist aber mit einem entsprechenden Aufwand verbunden.

Überraschenderweise kann das Problem des Anhaftens des Kunststoffmaterials aber bei der erfindungsgemäßen Verwendung dadurch gelöst werden, dass dem zur Reparatur verwendeten Material, welches noch nicht ausgehärtet ist, ein Antihaftmittel für das in das Formwerkzeug eingebrachte Kunststoffmaterial beigegeben wird, wobei es sich insbesondere um ein herkömmliches Formtrennmittel handeln kann. Als dem Reparaturmaterial beigemengtes Antihaftmittel wird in einer vorteilhaften Ausführungsform der Erfindung eine Metallseife verwendet wie z. B. Magnesiumstearat oder Kalziumstearat. Weitere Ausführungsformen der Erfindung sehen als Antihaftmittel vollständig oder partiell fluorierte Kohlenwasserstoffe vor, beispielsweise pulveriges PTFE.

Das Antihaftmittel kann auch Mischungen der genannten Stoffe enthalten. Vorzugsweise liegt der Gehalt von Antihaftmittel im Reparaturmaterial im Bereich von 1 bis 10 %.

Bei allen Prozentangaben in dieser Schrift handelt es sich um Gewichtsprozent (Gew. %).

Ein Material mit den im Patentanspruch 1 genannten Merkmalen ist an sich aus der EP 1 640 392 A1 bekannt. Das Material dient hier zur Herstellung von in einem Formwerkzeug geformten Formteilen. Das Material enthält als Antihaftmittel eine Metallseife, um die Haftung des geformten Teils am Formwerkzeug, beispielsweise Spritzgusswerkzeug, zu verhindern.

Die Korngröße des Antihaftmittels des erfindungsgemäß verwendeten Materials ist günstiger Weise nicht größer als 0,3 mm. Im Falle eines Einsatzes einer Metallseife als Antihaftmittel ist eine Korngröße von weniger als 0,1 mm bevorzugt. Im Falle eines Einsatzes eines vollständig oder partiell fluorierten Kohlenwasserstoffes beträgt die Korngröße vorzugsweise nicht mehr als 0,1 mm. Besonders bevorzugt sind Korngrößen von weniger als 10 µm.

Die Schmelztemperatur des Antihaftmittels liegt vorzugsweise oberhalb von 140° C.

In einer vorteilhaften Ausführungsform eines durch Polymerisation aushärtbaren Reparaturmaterials enthält das Reparaturmaterial als Monomer Methacrylat und/oder Acrylat. Vorzugsweise ist das Methacrylat und/oder Acrylat zur Ausbildung eines vernetzten Polymers mehrfunktionell.

In einer anderen Ausführungsform eines durch Polymerisation aushärtbaren Reparaturmaterials kann das Reparaturmaterial ein Monomer eines Polyesterharzes enthalten.

In einer bevorzugten Ausführungsform enthält das Reparaturmaterial weiters mindestens einen Füllstoff, wobei der Füllstoffgehalt je nach Einsatzzweck in einem großen Bereich, beispielsweise zwischen 2 und 95 %, variieren kann. Füllstoffe können zur Verstärkung des Reparaturmaterials eingesetzt werden, d. h. um die Festigkeit des Reparaturmaterials im ausgehärteten Zustand zu erhöhen. Solche Füllstoffe weisen einen passiven, insbesondere anorganischen, Kern und eine aktive Hülle auf, die bei der Polymerbildung reaktiv beteiligt ist. Die aktive Hülle kann beispielsweise in herkömmlicher Weise durch eine Oberflächenbehandlung mit Silan (= Silanisierung) gebildet werden.

Wenn eine verstärkende Wirkung der Kunststoffe gewünscht ist, so liegt der Füllstoffgehalt vorzugsweise bei mindestens 40 %, besonders bevorzugt bei mindestens 50 %.

Anstelle der verstärkenden Wirkung oder zusätzlich hierzu können Füllstoffe eingesetzt werden, um eine gewünschte Viskosität des Füllmaterials einzustellen. Ein solcher Füllstoff kann wieder einen passiven Kern und eine aktive Hülle aufweisen, welche in diesem Fall (auch) zur Regulierung der Polarität des Füllstoffs dient.

Wenn eine rheologische Wirkung des Füllstoffs gewünscht ist, so beträgt der Füllstoffgehalt vorzugsweise mindestens 2 %, besonders bevorzugt mindestens 3 %. Auch Mischungen von bei der Polymerbildung reaktiv beteiligten und nur rheologisch wirksamen Füllstoffen können vorgesehen sein.

Als anorganische Füllstoffe können beispielsweise pyrogene Kieselsäure, gemahlene Gläser, gemahlene Keramiken, gefällte Kieselsäuren oder Mischungen hiervon enthalten sein. Wenn gemahlene Gläser und/oder Keramiken eingesetzt werden, so beträgt die mittlere Korngröße (= der Mittelwert der Korngrößen der einzelnen Teilchen, bezogen auf eine Probemenge) vorzugsweise nicht mehr als 5 µm, besonders bevorzugt weniger als 1 µm.

Als organische Füllstoffe können insbesondere Pulver eingesetzt werden, deren Partikel von einem oder mehreren vernetzten Polymeren gebildet werden, beispielsweise vernetzten Methacrylaten und/oder Acrylaten. Die mittlere Korngröße für organische Füllstoffe liegt vorzugsweise unter 500 µm, besonders bevorzugt im Bereich von 20 bis 70 µm. Günstigerweise enthält das Reparaturmaterial mindestens 5 % aushärtbares Monomer, wobei ein Wert von mindestens 10 % bevorzugt ist.

Der Gehalt an Initiator bei einem durch Polymerisation oder Polykondensation aushärtbaren Monomer kann beispielsweise im Bereich von 0,05 % bis 3 % liegen.

Bevor das Reparaturmaterial auf die zu reparierende Schadstelle aufgebracht wird, ist es meist günstig wie an sich bekannt einen Haftvermittler aufzubringen. Solche Haftvermittler enthalten mindestens einen Stoff, der ein bivalentes Molekül, welches eine Affinität zur Metalloberfläche aufweist und eine reaktive Gruppe besitzt, die in der Lage ist, mit mindestens einem Monomer des Reparaturmaterials zu copolymerisieren. Haftvermittler sind bekannt, beispielsweise enthaltend ein Material ausgewählt aus der Gruppe, bestehend aus Methacryloylalkylphosphaten, Thiolen, Silanen, mehrfunktionellen Carbonsäurederivaten und Mischungen davon. Bei Reparaturmaterialien, welche als aushärtbares Monomermethacrylat oder Acrylat enthalten, können beispielsweise aktivierte Hydroxy-Silane eingesetzt werden, z. B. Methacryloylalkyl-Silane.

Weitere Vorteile und Einzelheiten der Erfindung werden im Folgenden anhand der beiliegenden Zeichnung erläutert. In dieser zeigen:
Fig. 1 eine schematische Draufsicht auf ein Formteil eines zu reparierenden Formwerkzeugs;
Fig. 2 eine Draufsicht auf das Formteil von Fig. 1 nach dem Ausfräsen der Schadstelle;
Fig. 3 einen Querschnitt entlang der Linie AA von Fig. 2;
Fig. 4 einen Querschnitt entsprechend Fig. 2, die Schadstelle befüllt;
Fig. 5 einen Querschnitt entsprechend Fig. 3 und Fig. 4 nach dem Aushärten und Abschleifen der Schadstelle.

Mit dem Reparaturmaterial gemäß der Erfindung können Schadstellen von unterschiedlichen Formwerkzeugen für die Kunststoffverarbeitung, insbesondere Spritzformen von Spritzgießanlagen repariert werden. Es können hierbei solche Reparaturen durchgeführt werden, bei denen Material des üblicherweise aus Metall bestehenden Formwerkzeuges ergänzt werden muss, insbesondere Reparaturen von durch Beschädigungen gebildete Vertiefungen.

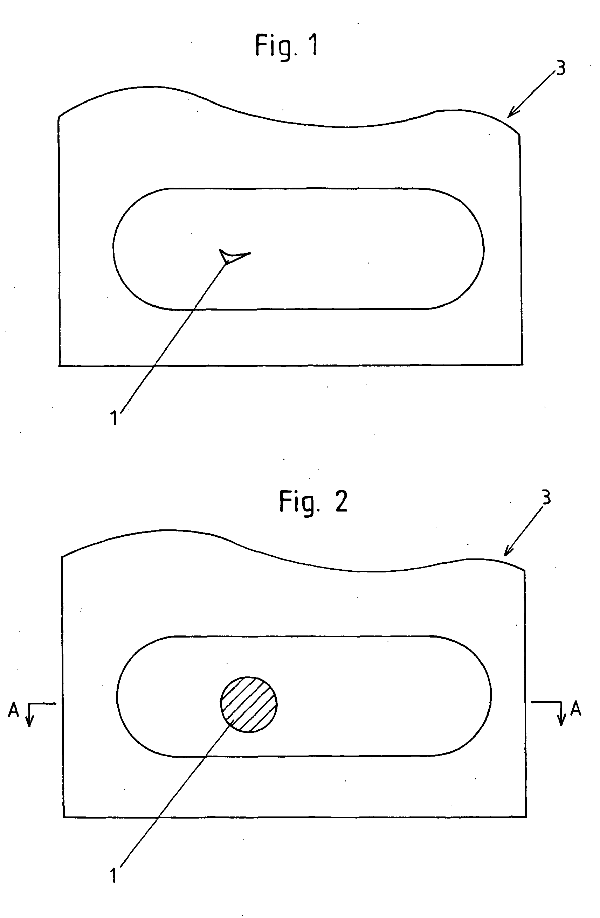

Ein eine zu reparierende Schadstelle 1 aufweisendes Formteil 3 eines Formwerkzeuges ist schematisch in Fig. 1 in Draufsicht dargestellt.

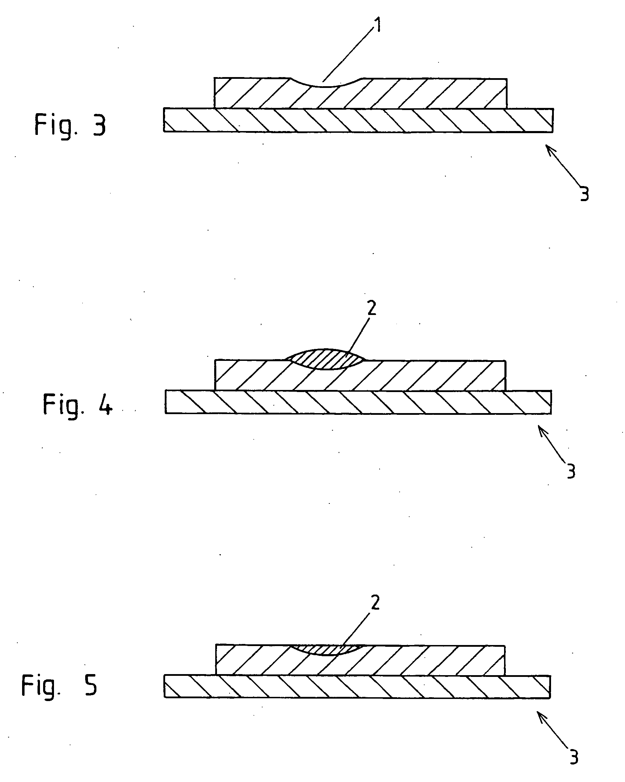

Zur Reparatur des Formwerkzeuges wird die zu reparierende Schadstelle 1 zunächst ausgefräst bzw. ausgeschliffen, so dass eine bearbeitete Schadstelle 1, wie aus Fig. 2 und 3 ersichtlich ist, erhalten wird, wobei an der Genauigkeit der Ausfräsung keine besonderen Anforderungen gestellt sind. Im Weiteren wird ein flüssiger Haftvermittler aufgebracht. In der Folge wird die Schadstelle 1 mit Reparaturmaterial 2 befüllt. Hierbei wird im Allgemeinen eine gewisse Überfüllung durchgeführt, wie aus Fig. 4 ersichtlich ist, um bei einer nach dem Aushärten erfolgenden Nachbearbeitung überflüssiges Material wiederum zu entfernen.

Es folgt die Aushärtung des Reparaturmaterials, beispielsweise mittels von einem Lichtgerät abgegebenen Licht geeigneter Wellenlänge, um eine Photopolymerisation durchzuführen.

Nach der Aushärtung erfolgt eine Nachbehandlung der Schadstelle, insbesondere durch Abschleifen und/oder Polieren. Das fertig reparierte Formteil ist in Fig. 5 schematisch dargestellt.

Das Reparaturmaterial 2 kann als aushärtbare Monomere beispielsweise Acrylate und/oder Methacrylate aufweisen. Als Initiator zur Auslösung der Polymerisation kann beispielsweise Campherchinon und/oder mindestens ein Benzoinderivat für eine Photopolymerisation oder mindestens ein Peroxid und/oder Pinacol für eine Aushärtung unter Einfluss einer erhöhten Temperatur vorliegen.

Der Einsatz von anderen polymerisierbaren Monomeren für das Reparaturmaterial ist denkbar und möglich, beispielsweise können Monomere von Polyesterharzen eingesetzt werden.

Bei 2-Komponentensystemen, z. B. Amin-Peroxid, Co-Hydroperoxyd, Amin-Epoxid, Isocyanat-Polyol, usw., erfolgt anstelle einer Aushärtung unter Anwendung von Hitze oder Licht, wodurch der enthaltene Initiator aktiviert wird, eine chemische Aushärtung. Bei diesen Systemen müssen zur Aktivierung der Aushärtung mindestens zwei Komponenten (Härter und Basismonomer) des Reparaturmaterials direkt vor der Applikation gemischt werden. Ein Reparaturset umfasst diese Komponenten somit noch in getrennter Form und das Reparaturmaterial wird durch Mischen dieser Komponenten gebildet und anschließend verarbeitet.

Das beschriebene Reparaturmaterial kann über die bislang beschriebenen Komponenten hinausgehend auch Farbstoffe und/oder weitere Zusatzstoffe enthalten.

Es folgen Beispiele für erfindungsgemäße Reparaturmaterialien bzw., im Falle von 2-Komponentensystemen, Komponenten von erfindungsgemäßen Reparaturmaterialien, wobei in den rechten Spalten der Tabellen jeweils die Gewichtsprozente der einzelnen Stoffe am Reparaturmaterial bzw. an der jeweiligen Komponente des Reparaturmaterials angeführt sind.

### Beispiel 1:

### Methacrylat Variante lichthärtend (Blaulicht) mit Teflonpulver.

| | |
|---|---|
| Urethandimethacrylat | 26,8 |
| Bis-GMA-dimethacrylat | 7,0 |
| Campherchinon | 0,15 |
| Glaspulver silanisiert | 37 |
| Pyrogene Kieselsäure silanisiert | 20 |
| PTFE-Pulver SST-4 | 5 |
| Tetraethylenglykoldimethacrylat | 4,05 |

Mit Blaulicht härtbares Material auf Basis von mehrfunktionellen Methacrylaten. SST-4 ist ein PTFE Pulver (Polytetrafluorethylen) mit einer mittleren Korngröße von 3,5 µm.

### Beispiel 2:

### Methacrylat Variante lichthärtend (UV-Licht) mit Teflonpulver und organischem Füllstoff.

| | |
|---|---|
| Urethandimethacrylat | 18,2 |
| Bis-GMA-dimethacrylat | 6,3 |
| Genocure BDK | 2 |
| Dynoadd P-506 | 60 |
| Pyrogene Kieselsäure silanisiert | 3,5 |
| FluoroSlip 511 | 6 |
| Tetraethylenglykoldimethacrylat | 4 |

Mit UV-Licht härtbare Variante. Fluoroslip 511 ist ein Compound aus hochmolekularem Polyethylen und PTFE mit einer mittleren Korngröße von 6 µm. Dynoadd P-506 ist ein organischer Füllstoff auf Basis von vernetztem Methacrylat.

### Beispiel 3:

### Methacrylat Variante lichthärtend und heißhärtend mit Metallseife (Calciumstearat)

| | |
|---|---|
| Urethandimethacrylat | 18 |
| Bis-GMA-dimethacrylat | 15,0 |
| Campherchinon | 0,3 |
| Glaspulver silanisiert | 50 |
| Pyrogene Kieselsäure silanisiert | 6,0 |
| Ceasit POE | 5 |
| Tetraethylenglykoldimethacrylat | 5 |
| Benzpinakol | 0,7 |

Mit Blaulicht und Hitze härtbare Variante. Das Produkt wird nach dem Befüllen der Reparaturstelle mit Blaulicht ausgehärtet. Der zusätzliche thermische Initiator Benzpinakol, ermöglicht die Nachhärtung mit Hitze. Das hat den Vorteil, dass bei opaken Varianten bei denen das Licht nicht an alle Stellen der Reparatur gleich gut vordringt, eine Nachhärtung mit Hitze ermöglicht wird. Ceasit POE ist ein Calciumstearat mit einer Korngröße von <45µm.

### Beispiel 4:

### Polyestervariante lichthärtend (UV-Variante) mit Metallseife (Magnesiumstearat)

| | |
|---|---|
| Polyester Acrylat 03-849 | 22 |
| Genocure LTM | 2 |
| Glaspulver silanisiert | 50 |
| Pyrogene Kieselsäure silanisiert | 6,0 |
| Mg-stearat AV | 5 |
| Divinylbenzol | 5 |

UV-hätbare Polyestermischung. Mg-stearat AV ist eine Magnesiumseife der Fettsäuren C16-C18. Die Korngröße liegt bei 0,3 - 3,0 mm.

### Beispiel 5:

### Chemisch härtende Methacrylat Variante (Amin/Peroxid System). 2-Komponentenmaterial Pulver Flüssigkeit mit Magnesiumstearat als Antihaftmittel.

### Komponente A:

| | |
|---|---|
| Urethandimethacrylat | 18 |
| Bis-GMA-dimethacrylat | 70 |
| Dimethyl-p-toluidin | 2 |
| Tetraethylenglykoldimethacrylat | 10 |

### Komponente B:

| | |
|---|---|
| Glaspulver silanisiert | 80 |
| Pyrogene Kieselsäure silanisiert | 6,0 |
| Mg-stearat PM | 10 |
| Benzoylperoxid 70 % | 4 |

Selbsthärtende (chemisch härtende) Variante. Das Redoxpaar Benzoylperoxid und Dimethyl-p-toluidin (Initiatoren) lösen die readikalische Polymerisation aus. Die Aushärtung erfolgt in wenigen Minuten. Mg-stearat PM ist eine Metallseife der Fettsäuren C16-C18. Die Korngröße ist <71µm.

### Beispiel 6:

### Epoxy Variante (Polyaddition) 2-Komponentensystem Paste/Paste. 2 verschiedene Anti-haftmittel kombiniert PTFE und Ca-stearat.

### Komponente A (Basispaste):

| | |
|---|---|
| Epilox A 19-00 | 30 |
| Epilox T 19-41/700 | 20 |
| Glaspulver silanisiert 0,7 µm | 45 |
| PTFE Pulver SST-4 | 5 |

### Komponente B (Härtepaste):

| | |
|---|---|
| Epilox Härter H10-30 | 50 |
| Glaspulver silanisiert 0,7 µm | 42 |
| Ceasit POE | 8 |

Die Komponente A+B werden im Verhältnis 2 Teile Basispaste zu 1 Teil Härtepaste gemischt. Die Gelierzeit (Verarbeitungszeit) ist <120 Minuten. Nach 3-4 Stunden kann die Reparatur bearbeitet werden.

### Legende

### zu den Hinweisziffern:

- 1: Schadstelle
- 2: Reparaturmaterial
- 3: Formteil

## Patentansprüche

1. Verwendung eines Materials, welches umfasst
- mindestens ein aushärtbares Monomer,
- einen Initiator oder eine Härterkomponente für die Polymerbildung und
- ein Antihaftmittel für ein in ein Formwerkzeug für die Kunststoffverarbeitung einzubringendes Kunststoffmaterial
zur Reparatur eines Formwerkzeuges für die Kunststoffverarbeitung.

2. Verwendung nach Anspruch 1, **dadurch gekennzeichnet, dass** das Antihaftmittel eine Metallseife, vorzugsweise Magnesiumstearat und/oder Kalziumstearat, enthält oder von dieser gebildet wird.

3. Verwendung nach Anspruch 1 oder 2, **dadurch gekennzeichnet, dass** das Antihaftmittel einen vollständig oder partiell fluorierten Kohlenwasserstoff enthält oder von diesem gebildet wird.

4. Verwendung nach einem der Ansprüche 1 bis 3, **dadurch gekennzeichnet, dass** das Material 1 -b10 Gew.% Antihaftmittel enthält.

5. Verwendung nach einem der Ansprüche 1 bis 4, **dadurch gekennzeichnet, dass** das Material 0,05 - 3 Gew.% Initiator enthält.

6. Verwendung nach einem der Ansprüche 1 bis 5, **dadurch gekennzeichnet, dass** das Material als aushärtbares Monomer, vorzugsweise mehrfunktionelles, Methacrylat und/oder, vorzugsweise mehrfunktionelles, Acrylat enthält.

7. Verwendung nach einem der Ansprüche 1 bis 5, **dadurch gekennzeichnet, dass** das Material mindestens ein Monomer eines Polyester-Kunstharzes enthält.

8. Verwendung nach einem der Ansprüche 1 bis 5, **dadurch gekennzeichnet, dass** das Material mindestens 1 Monomer eines Epoxid-Kunstharzes enthält.

9. Verwendung nach einem der Ansprüche 1 bis 8, **dadurch gekennzeichnet, dass** das Material mindestens 5 Gew.%, vorzugsweise mindestens 10 Gew.%, Monomer enthält.

10. Verwendung nach einem der Ansprüche 1 bis 9, **dadurch gekennzeichnet, dass** das Material mindestens einen, vorzugsweise die Festigkeit des ausgehärteten Materials verstärkenden und/oder die Viskosität des noch nicht ausgehärteten Materials erhöhenden, Füllstoff enthält.

11. Verwendung nach Anspruch 10, **dadurch gekennzeichnet, dass** das Material mindestens einen anorganischen Füllstoff ausgewählt aus der Gruppe, bestehend aus pyrogener Kieselsäure, gefällter Kieselsäure, Glaspulver, Keramikpulver und Mischungen davon, aufweist, der vorzugsweise mit Silan oberflächenbehandelt ist.

12. Verwendung nach Anspruch 10 oder 11, **dadurch gekennzeichnet, dass** das Material mindestens einen organischen Füllstoff, vorzugsweise in Form eines vernetzten Polymers, enthält.

13. Verwendung nach einem der Ansprüche 10 bis 12, **dadurch gekennzeichnet, dass** der Füllstoffgehalt des Materials im Bereich von 2 bis 95 Gew.% liegt.

14. Verwendung nach einem der Ansprüche 1 bis 13, **dadurch gekennzeichnet, dass** das Antihaftmittel eine mittlere Korngröße von nicht mehr als 0,3 mm aufweist.

15. Verwendung nach einem der Ansprüche 1 bis 14, **dadurch gekennzeichnet, dass** vor dem Aufbringen des Materials auf eine Schadstelle (1) ein Haftvermittler aufgetragen wird und dass nach der Aushärtung des Materials eine Nachbearbeitung im Bereich der Schadstelle (1) durchgeführt wird, wobei diese Nachbearbeitung ein Abschleifen von überflüssigem ausgehärtetem Material umfasst und dass vorzugsweise die Schadstelle (1) vor dem Auftragen des Haftvermittlers ausgeschliffen bzw. ausgefräst wird.

## Claims

1. Use of a material which comprises
- at least one curable monomer,
- an initiator or a hardener for the polymer formation, and
- a non-stick agent for a plastics material to be introduced into a mould for plastics processing,
for the repair of a mould for plastics processing.

2. Use according to Claim 1, **characterised in that** the non-stick agent contains a metal soap, preferably magnesium stearate and/or calcium stearate, or is formed thereby.

3. Use according to Claim 1 or 2, **characterised in that** the non-stick agent contains a completely or partially fluorinated hydrocarbon, or is formed thereby.

4. Use according to one of Claims 1 to 3, **characterised in that** the material contains 1 - 10% by weight non-stick agent.

5. Use according to one of Claims 1 to 4, **characterised in that** the material contains 0.05 - 3% by weight initiator.

6. Use according to one of Claims 1 to 5, **characterised in that** the material contains preferably multifunctional methacrylate and/or preferably multifunctional acrylate as curable monomer.

7. Use according to one of Claims 1 to 5, **characterised in that** the material contains at least one monomer of a synthetic polyester resin.

8. Use according to one of Claims 1 to 5, **characterised in that** the material contains at least 1 monomer of a synthetic epoxy resin.

9. Use according to one of Claims 1 to 8, **characterised in that** the material contains at least 5% by weight, preferably at least 10% by weight, monomer.

10. Use according to one of Claims 1 to 9, **characterised in that** the material contains at least one filler which preferably reinforces the strength of the cured material and/or increases the viscosity of the not-yet-cured material.

11. Use according to Claim 10, **characterised in that** the material contains at least one inorganic filler selected from the group consisting of fumed silica, precipitated silica, glass powder, ceramic powder and mixtures thereof, which is preferably surface-treated with silane.

12. Use according to Claim 10 or 11, **characterised in that** the material contains at least one organic filler, preferably in the form of a cross-linked polymer.

13. Use according to one of Claims 10 to 12, **characterised in that** the filler content of the material lies in the range from 2 to 95% by weight.

14. Use according to one of Claims 1 to 13, **characterised in that** the non-stick agent has an average grain size of no more than 0.3 mm

15. Use according to one of Claims 1 to 14, **characterised in that** before the application of the material to a damaged area (1) an adhesion promoter is applied, and **in that** after the curing of the material secondary finishing is carried out in the region of the damaged area (1), this secondary finishing comprising abrading of excess cured material, and **in that** preferably the damaged area (1) is ground out or milled out before the application of the adhesion promoter.

## Revendications

1. Utilisation d'un matériau comprenant
- au moins un monomère durcissable,
- un initiateur ou un composant durcisseur pour la formation du polymère, et
- un agent anti-adhésif pour une matière plastique à introduire dans un moule pour le traitement de matière plastique,
en vue de la réparation d'un moule pour le traitement de matière plastique.

2. Utilisation selon la revendication 1, **caractérisée en ce que** l'agent anti-adhésif contient un savon métallique, de préférence un stéarate de magnésium et/ou un stéarate de calcium, ou est formé par celui-ci.

3. Utilisation selon la revendication 1 ou 2, **caractérisée en ce que** l'agent anti-adhésif contient un hydrocarbure fluoré en totalité ou en partie ou est formé par celui-ci.

4. Utilisation selon l'une quelconque des revendications 1 à 3, **caractérisée en ce que** le matériau contient 1 à 10 % en poids d'agent anti-adhésif.

5. Utilisation selon l'une quelconque des revendications 1 à 4, **caractérisée en ce que** le matériau contient 0,05 à 3 % en poids d'initiateur.

6. Utilisation selon l'une quelconque des revendications 1 à 5, **caractérisée en ce que** le matériau en tant que monomère durcissable contient du méthacrylate, de préférence multifonctionnel et/ou de l'acrylate, de préférence multifonctionnel.

7. Utilisation selon l'une quelconque des revendications 1 à 5, **caractérisée en ce que** le matériau contient au moins un monomère d'une résine polyester.

8. Utilisation selon l'une quelconque des revendications 1 à 5, **caractérisée en ce que** le matériau contient au moins un monomère d'une résine époxy.

9. Utilisation selon l'une quelconque des revendications 1 à 8, **caractérisée en ce que** le matériau contient au moins 5 % en poids, de préférence au moins 10 % en poids de monomère.

10. Utilisation selon l'une quelconque ces revendications - à 9, **caractérisée en ce que** le matériau contient au moins une matière de remplissage renforçant de préférence la résistance du matériau durcissable et/ou augmentant la viscosité du matériau non encore durci.

11. Utilisation selon la revendication 10, **caractérisée en ce que** le matériau comporte au moins une matière de remplissage anorganique, choisie dans le groupe constitué d'acide silicique pyrogène, d'acide silicique précipité, de poudre de verre, de poudre de céramique et de mélanges de ceux-ci, ladite matière de remplissage étant de préférence revêtue en surface avec du silane.

12. Utilisation selon la revendication 10 ou 11, **caractérisée en ce que** le matériau contient au moins une matière de remplissage organique, de préférence sous la forme d'un polymère réticulé.

13. Utilisation selon l'une quelconque des revendications 10 à 12, **caractérisée en ce que** la matière de remplissage est contenue dans le matériau avec une teneur se situant dans une plage de 2 à 95 % en poids,

14. Utilisation selon l'une quelconque des revendications 1 à 13, **caractérisée en ce que** l'agent anti-adhésif possède une taille de grain moyenne ne dépassant pas 0,3 mm.

15. Utilisation selon l'une quelconque des revendications 1 à 14, **caractérisée en ce qu'**avant l'application du matériau sur une zone endommagée (1), on applique un agent adhésif, eL **en ce qu'**après le durcissement du matériau, un usinage de reprise est effectué dans la partie de la zone endommagée (1), cet usinage de reprise comprenant un ponçage du matériau durci excédentaire, et **en ce que**, de préférence, la zone endommagée (1) est alésée par meulage ou fraisage avant l'application de l'agent adhésif.
